# EUROPÄISCHE PATENTANMELDUNG

(11) **EP 2 965 619 A1**
(43) Veröffentlichungstag der Anmeldung: **13.01.2016**
(21) Anmeldenummer: 14176359.9
(22) Anmeldetag: 09.07.2014
(51) Int. Cl.: A01K 5/02, A01K 9/00

(54) **System zur Fütterung von Nutztieren**

(71) Anmelder: Holm, Hans-Joachim, 24784 Westerrönfeld (DE); Laue, Hans-Joachim, Prof. Dr., 24783 Osterrönfeld (DE)
(72) Erfinder: Holm, Hans-Joachim, 24784 Westerrönfeld (DE); Laue, Hans-Joachim, Prof. Dr., 24783 Osterrönfeld (DE)
(74) Vertreter: Hauck Patentanwaltspartnerschaft mbB

(57) **Zusammenfassung**

System zur Fütterung von Nutztieren, insbesondere Kälbern, mit
● einem fahrbaren Milchwagen (24), der einen Vorratsbehälter (26), eine mit dem Vorratsbehälter verbundene Abgabeeinrichtung (32) und eine Dosiersteuerung (34) aufweist, die dazu ausgebildet ist, eine vorgebbare Dosiermenge an Futtermittel aus dem Vorratsbehälter über die Abgabeeinrichtung abzugeben, und
● einem Transponder, der zur Befestigung an einer Nutztierbox ausgebildet ist,
● wobei der Milchwagen ein mit der Dosiersteuerung verbundenes Lesegerät (36) zum Auslesen von in dem Transponder gespeicherten Daten aufweist und die Dosiersteuerung dazu ausgebildet ist, auf Grundlage der ausgelesenen Daten eine Dosiermenge vorzugeben, die für mindestens ein in der Nutztierbox gehaltenes Nutztier vorgesehen ist.

## Beschreibung

Die Erfindung betrifft ein System und ein Verfahren zur Fütterung von Nutztieren mit einem fahrbaren Milchwagen und einem Transponder.

Aus der Druckschrift EP 1 897 438 A2 ist ein fahrbarer Milchwagen mit einem Vorratsbehälter, einer Abgabeeinrichtung und einer Dosiersteuerung bekannt. Mit einem derartigen Milchwagen kann eine größere Anzahl von Nutztieren, insbesondere Kälbern, relativ einfach mit Milch versorgt werden. Hierzu wird in dem Vorratsbehälter eine größere Menge an Milch angemischt, beispielsweise 300 1, und mit dem Milchwagen zu den einzelnen Tieren transportiert. Mit Hilfe der Dosiersteuerung kann ein Benutzer die für jedes Tier abzugebende Dosiermenge, beispielsweise 3 1, vorgeben und beispielsweise einen dem Tier zugeordneten Nuckeleimer auf Knopfdruck damit befüllen. Anpassungen der Dosiermenge erfordern jeweils eine manuelle Eingabe.

Ebenfalls bekannt sind stationäre Tränkevorrichtungen, in denen für jedes Tier individuell eine bestimmte Menge an Milch zubereitet wird. Diese bekannten Tränkevorrichtungen weisen einen Anmischbehälter auf, der über eine Saugleitung mit einem Nuckel verbunden ist. Sobald sich ein Tier dem Nuckel nähert, wird die für dieses Tier vorgesehene Milch angemischt. Für eine bedarfsgerechte Versorgung ist es bei solchen stationären Tränkevorrichtungen bekannt, jedes Tier mit einem Transponder zu kennzeichnen und nahe dem Nuckel ein Lesegerät anzuordnen. Nähert sich ein Tier dem Nuckel, wird der Transponder ausgelesen und eine für dieses Tier vorgesehene Milchmenge wird zubereitet.

Davon ausgehend ist es die Aufgabe der Erfindung, ein System und ein Verfahren zur Fütterung von Nutztieren zur Verfügung zu stellen, das die Fütterung mit einem fahrbaren Milchwagen weiter vereinfacht.

Diese Aufgabe wird gelöst durch das System mit den Merkmalen des Anspruchs 1. Vorteilhafte Ausgestaltungen sind in den sich anschließenden Unteransprüchen angegeben.

Das System dient zur Fütterung von Nutztieren, insbesondere Kälbern, und weist Folgendes auf:
- einen fahrbaren Milchwagen, der einen Vorratsbehälter, eine mit dem Vorratsbehälter verbundene Abgabeeinrichtung und eine Dosiersteuerung aufweist, die dazu ausgebildet ist, eine vorgebbare Dosiermenge an Futtermittel aus dem Vorratsbehälter über die Abgabeeinrichtung abzugeben, und
- einen Transponder, der zur Befestigung an einer Nutztierbox ausgebildet ist,
- wobei der Milchwagen ein mit der Dosiersteuerung verbundenes Lesegerät zum Auslesen von in dem Transponder gespeicherten Daten aufweist und die Dosiersteuerung dazu ausgebildet ist, auf Grundlage der ausgelesenen Daten eine Dosiermenge vorzugeben, die für mindestens ein in der Nutztierbox gehaltenes Nutztier vorgesehen ist.

Das in dem Vorratsbehälter aufgenommene Futtermittel kann insbesondere Milch sein, z. B. angemischt aus Milchpulver und Wasser. Es kommt aber auch jedes andere flüssige oder pumpfähige Futtermittel in Betracht.

Die Abgabeeinrichtung kann ein Abgaberohr und/oder einen Abgabeschlauch aufweisen, insbesondere mit einer Zapfpistole. Der fahrbare Milchwagen kann überdies ein Fahrgestell mit mindestens einem lenkbaren Rad, einen Handgriff und/oder eine Deichsel, eine elektrisch angetriebene Pumpe, die von der Dosiersteuerung angesteuert wird, ein Rührwerk zum Anmischen des Futtermittels, gegebenenfalls mit einem elektrischen Antriebsmotor, und eine Batterie zur Energieversorgung der Pumpe, des Rührwerks und/oder der Dosiersteuerung aufweisen.

Der Transponder kann beispielsweise ein RFID Tag sein, wie er auch zur Kennzeichnung der Nutztiere eingesetzt wird. Anders als die zu diesem Zweck bekannten Transponder wird er jedoch nicht an dem Nutztier selbst, beispielsweise im Ohr eine Kalbs, befestigt, sondern ist zur Befestigung an einer Nutztierbox ausgebildet. Hierzu kann der Transponder spezielle Befestigungsmittel aufweisen, beispielsweise ein Gewinde, ein Rastelement, einen Magneten oder eine definierte Befestigungskontur. Mit Hilfe der Befestigungsmittel kann der Transponder an einer Nutztierbox, in der sich das mindestens eine Nutztier befindet, befestigt werden.

Die in dem Transponder gespeicherten Daten können insbesondere eine individuelle Kennnummer des Transponders umfassen. Das Lesegerät des Milchwagens liest diese Daten aus. Die Dosiersteuerung ermittelt auf Grundlage der ausgelesenen Daten dann eine für die in der Nutztierbox gehaltenen Nutztiere vorgesehene Dosiermenge, die für einen nachfolgenden Dosiervorgang vorgegeben wird.

Auf diese Weise wird automatisch, ohne eine manuelle Eingabe, die ideale Futtermittelmenge für ein oder mehrere, in der Nutztierbox befindliche Nutztiere abgegeben. Die Bedienperson benötigt hierzu keinerlei Kenntnisse über die Trinkgewohnheiten oder sonstige Eigenschaften der Tiere, auch nicht über deren Anzahl. Insbesondere muss er nicht, wie bei der Verwendung herkömmlicher Milchwagen üblich, von einem an der Nutztierbox beispielsweise handschriftlich vermerkten Alter der Tiere aufgrund seiner Erfahrung oder aufgrund von schriftlichen Vorgaben auf die vorgesehenen Futtermengen schließen. Er muss diese vorgesehenen Mengen also weder selbst ermitteln, noch muss er sie manuell am Milchwagen eingeben. Die exakte Dosierung der vorgesehenen Futtermittelmenge erfolgt stattdessen vollautomatisch, wodurch sich die Fütterung vereinfacht und auch von weniger qualifiziertem Personal schnell und zuverlässig durchgeführt werden kann.

Im Gegensatz zu den bekannten, stationären Tränkevorrichtungen ist es bei dem erfindungsgemäßen System nicht erforderlich, dass sich das Nutztier zu einem Saugnuckel bewegt. Es kann ganz ohne Zutun des Nutztiers, z. B. wenn sich dieses in einen rückwärtigen Bereich der Nutztierbox zurückgezogen hat, anhand des an der Nutztierbox befestigen Transponders die vorgesehene Futtermittelmenge bestimmt werden.

In einer Ausgestaltung umfasst das System eine Datenbank, in der den auf dem Transponder gespeicherten Daten Daten über das mindestens eine in der Nutztierbox gehaltene Nutztier zugeordnet sind. Diese zugeordneten Daten können zum Beispiel eine Anzahl von Nutztieren und deren Alter enthalten, aber auch weiterführende Daten zum Beispiel über einen Gesundheitszustand oder einen Futtermittelbedarf eines oder mehrerer Nutztiere. Auf diese Weise sind jedem Transponder die Informationen zugeordnet, die zur Ermittlung der idealen Futtermittelmenge für alle in der Nutztierbox befindlichen Nutztiere maßgeblich sind. Grundsätzlich können diese Informationen oder die Futtermittelmenge selbst auch direkt auf dem Transponder gespeichert werden. Unter Verwendung einer Datenbank ist jedoch die Aktualisierung der Daten einfacher und von zentraler Stelle aus möglich. In der Datenbank kann als Zwischenschritt auch eine Zuordnung zu den auf dem Transponder gespeicherten Daten zu einer bestimmten Nutztierbox gespeichert sein. In diesem Fall kann der Transponder der Nutztierbox fest zugeordnet sein und bei wechselnder Belegung der Nutztierbox daran verbleiben. Die Daten über die in der Nutztierbox befindlichen Tiere können dann besonders einfach in der Datenbank gepflegt werden.

In einer Ausgestaltung weist das System eine Halterung zur Aufnahme des Transponders auf, die zur Befestigung an der Nutztierbox ausgebildet ist. Beispielsweise kann der Transponder in die Aufnahme der Halterung eingesetzt, eingerastet oder eingeschoben werden. Die Halterung kann Befestigungsmittel zur Befestigung an der Nutztierbox aufweisen, beispielsweise Schrauben, die in einen Träger der Kälberbox eingeschraubt werden, oder eine Klemme, insbesondere eine Schraubklemme, zur Befestigung an einem Träger der Nutztierbox. Mit Hilfe der Halterung ist eine besonders einfache und sichere Befestigung des Transponders an der Nutztierbox möglich. Insbesondere kann der Transponder einfach ausgetauscht werden, wenn die Nutztierbox mit einem anderen Tier belegt wird.

In einer Ausgestaltung ist der Transponder in eine Sichttafel integriert. Beispielsweise kann der Transponder dauerhalft mit der Sichttafel verbunden oder in diese eingearbeitet sein, beispielsweise eingegossen. Die Sichttafel kann an der Nutztierbox befestigt werden, beispielsweise unter Verwendung der erläuterten Halterung. Die Sichttafel ist besonders einfach handhabbar und kann den Transponder bzw. das dem Transponder zugeordnete Nutztier betreffende Informationen visuell darstellen, sodass ein Benutzer diese Informationen unabhängig von dem Lesegerät überprüfen kann.

In einer Ausgestaltung weist die Sichttafel eine Farbcodierung und/oder ein Beschriftungsfeld auf. Die Farbcodierung kann beispielsweise ein Geburtsdatum oder ein Alter eines zugeordneten Nutztiers darstellen. Diese oder andere Informationen können auch auf dem Beschriftungsfeld vermerkt werden.

In einer Ausgestaltung weist das Lesegerät eine Antenne auf, die an einer Seite des Milchwagens in einer Höhe im Bereich von 10 cm bis 80 cm über dem Erdboden angeordnet ist. Die Seite des Milchwagens, an der die Antenne angeordnet ist, kann insbesondere die in Hauptfahrtrichtung des Milchwagens rechts oder links angeordnete Seite des Milchwagens sein. Diese kann besonders dicht an der betreffenden Nutztierbox vorbeigefahren werden, sodass der Abstand zwischen dem Transponder an der Nutztierbox und der Antenne minimiert wird. Hierzu trägt auch die Anordnung der Antenne in dem genannten Höhenbereich bei, die auf eine Höhe, in der der Transponder bevorzugt an der Nutztierbox befestigt wird, abgestimmt sein kann.

In einer Ausgestaltung weist der Milchwagen einen Arm auf, der seitlich über den Milchwagen übersteht und an dem eine Antenne des Lesegeräts befestigt ist. Der Arm kann klapp- oder schwenkbar an dem Milchwagen befestigt sein, insbesondere in dem genannten Höhenbereich. Er kann auch fest an dem Milchwagen angeordnet sein. Der seitliche Überstand des Arms und die entsprechend weit außen gelegene Anordnung der Antenne trägt ebenfalls zu einem geringen Abstand zu einem Transponder und damit zu einem zuverlässigen Auslesevorgang der Daten bei.

In einer Ausgestaltung weist die Antenne eine Fläche von 400 cm² oder mehr auf. Bekannte Lesegeräte herkömmlicher Tränkevorrichtungen, die zum Auslesen von insbesondere am Ohr eines Tiers befestigten Transpondern vorgesehen sind, sind relativ klein und funktionieren nur über geringe Abstände im Bereich von beispielsweise 10 cm bis 15 cm zuverlässig. Die Verwendung einer Antenne, die mindestens die genannte Fläche, vorzugsweise eine Fläche von 600 cm² oder sogar 900 cm² oder mehr aufweist, ermöglicht eine größere Reichweite, sodass die Transponder ohne übermäßige Sorgfalt bei der Positionierung des Milchwagens an der Nutztierbox zuverlässig ausgelesen werden können.

In einer Ausgestaltung ist die Dosiersteuerung dazu ausgebildet, die für das mindestens eine in der Nutztierbox gehaltene Nutztier vorgesehene Dosiermenge anhand eines Alters des mindestens einen Nutztiers und einer in der Dosiersteuerung hinterlegten Futterkurve zu ermitteln. Die Futterkurve ist eine Zuordnung vorgesehener Futtermittelmengen zum Alter eines Nutztiers. Sie kann in Form einer mathematischen Funktion oder einer Tabelle in der Dosiersteuerung hinterlegt sein. Das Alter des Nutztiers kann von der Dosiermenge entweder direkt aus dem Transponder ausgelesen oder anhand einer aus dem Transponder ausgelesenen Kennung des Nutztiers einer Datenbank entnommen werden. Die Datenbank kann insbesondere in der Dosiersteuerung hinterlegt sein. Hierzu genügt es, zu jedem anhand seiner Kennung identifizierten Tier das Geburtsdatum zu speichern. Dann kann anhand eines aktuellen Datums das Alter des Tieres berechnet und die vorgesehene Futtermittelmenge anhand der Futterkurve ermittelt werden.

Die oben angegebene Aufgabe wird ebenfalls gelöst durch das Verfahren mit den Merkmalen des Anspruchs 10.

Das Verfahren dient zur Fütterung von Nutztieren und weist die folgenden Schritte auf:
- Befestigen eines Transponders an einer Nutztierbox,
- Fahren eines Milchwagens, der ein Lesegerät aufweist, zu der Nutztierbox,
- Auslesen von in dem Transponder gespeicherten Daten mit dem Lesegerät,
- Vorgeben einer Futtermittelmenge, die für mindestens ein in der Nutztierbox gehaltenes Nutztier vorgesehen ist, auf Grundlage der ausgelesenen Daten,
- Abgeben der vorgegebenen Futtermittelmenge mit dem Milchwagen in einen der Nutztierbox zugeordneten Tränkebehälter.

Zu den Merkmalen und Vorteilen des Verfahrens wird auf die vorstehenden Erläuterungen des erfindungsgemäßen Systems verwiesen, die entsprechend gelten. Insbesondere kann das Verfahren mit dem erfindungsgemäßen System ausgeführt und entsprechend den einzelnen Merkmalen des Systems weiter ausgestaltet werden. Zum Beispiel kann der Transponder mit Hilfe einer Halterung an der Nutztierbox befestigt werden, usw.

Der der Nutztierbox zugeordnete Tränkebehälter kann insbesondere ein Trog, ein Nuckeleimer, eine Nuckelflasche oder eine sonstige Trinkflasche sein.

Nachfolgend wird die Erfindung anhand eines in einer Figur dargestellten Ausführungsbeispiels näher erläutert.

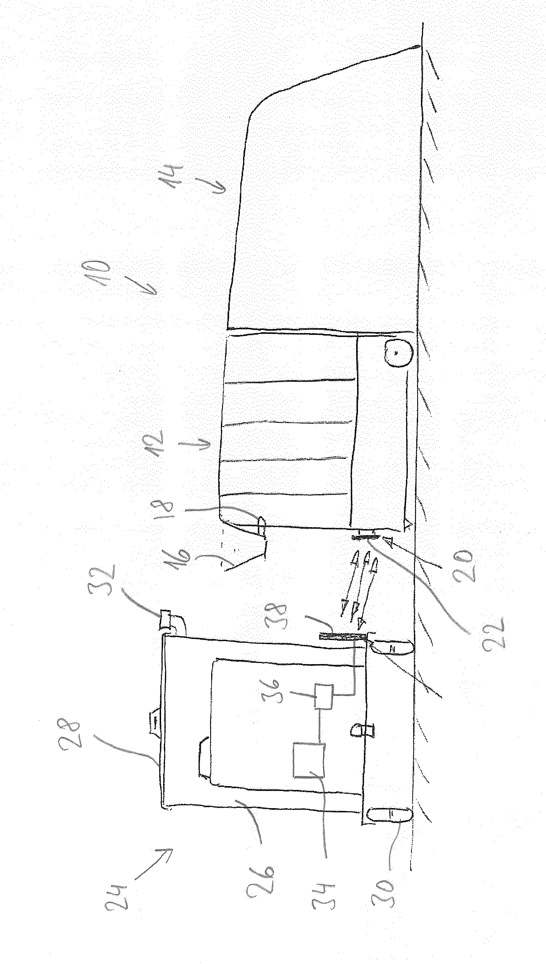

Die einzige Figur zeigt eine Kälberbox mit einem Transponder und einem Milchwagen.

Die Kälberbox 10 ist eine für ein Kalb vorgesehene Nutztierbox. Sie weist ein fahrbares Gatter 12 und eine daran angeschlossene Kälberhütte 14 auf, in die sich das Kalb zurückziehen kann. Als dem Kalb zugeordneter Tränkebehälter ist beispielhaft ein Nuckeleimer 16 mit einem Nuckel 18 gezeigt, der an dem Gatter 12 befestigt ist.

Ebenfalls an dem Gatter 12 befestigt ist eine Halterung 20, in die eine Sichttafel 22, in die ein Transponder integriert ist, eingeschoben ist.

Auf dem Transponder der Sichttafel 22 sind Daten über das in der Kälberbox 10 gehaltene Kalb gespeichert, insbesondere eine das Kalb eindeutig identifizierende Kennnummer. Weitere Informationen über das Kalb, insbesondere sein Geburtsdatum, sind auf einem nicht dargestellten Beschriftungsfeld der Sichttafel 22 vermerkt.

Der fahrbare Milchwagen 24 weist einen Vorratsbehälter 26, der mit einem Deckel 28 verschließbar ist, und mehrere Räder 30 auf. Außerdem hat der Milchwagen 24 eine in der Figur nur angedeutete Abgabevorrichtung 32, die mit dem Vorratsbehälter 26 verbunden ist. Eine Dosiersteuerung 34 ermöglicht die Abgabe einer vorgegebenen Dosiermenge aus dem Vorratsbehälter 26 über die Abgabevorrichtung 32 in den Nuckeleimer 16. Die Dosiersteuerung 34 steuert hierzu eine nicht dargestellte Pumpe an.

Die Dosiersteuerung 34 ist außerdem mit einem Lesegerät 36 verbunden, das eine seitlich an dem Milchwagen 24 angeordnete Antenne 38 aufweist. Wie durch die Doppelpfeile angedeutet, kann das Lesegerät 36 mit der für die Antenne 38 die auf dem Transponder der Sichttafel 22 gespeicherten Daten auslesen.

### Liste der verwendeten Bezugszeichen:

- 10: Kälberbox
- 12: Gatter
- 14: Kälberhütte
- 16: Nuckeleimer
- 18: Nuckel
- 20: Halterung
- 22: Sichttafel
- 24: Milchwagen
- 26: Vorratsbehälter
- 28: Deckel
- 30: Räder
- 32: Abgabevorrichtung
- 34: Dosiersteuerung
- 36: Lesegerät
- 38: Antenne

## Patentansprüche

1. System zur Fütterung von Nutztieren, insbesondere Kälbern, mit
• einem fahrbaren Milchwagen (24), der einen Vorratsbehälter (26), eine mit dem Vorratsbehälter (26) verbundene Abgabeeinrichtung (32) und eine Dosiersteuerung (34) aufweist, die dazu ausgebildet ist, eine vorgebbare Dosiermenge an Futtermittel aus dem Vorratsbehälter (26) über die Abgabeeinrichtung (32) abzugeben, und
• einem Transponder, der zur Befestigung an einer Nutztierbox ausgebildet ist,
• wobei der Milchwagen (24) ein mit der Dosiersteuerung (34) verbundenes Lesegerät (36) zum Auslesen von in dem Transponder gespeicherten Daten aufweist und die Dosiersteuerung (34) dazu ausgebildet ist, auf Grundlage der ausgelesenen Daten eine Dosiermenge vorzugeben, die für mindestens ein in der Nutztierbox gehaltenes Nutztier vorgesehen ist.

2. System nach Anspruch 1, **dadurch gekennzeichnet, dass** das System eine Datenbank umfasst, in der den auf dem Transponder gespeicherten Daten Daten über das mindestens eine in der Nutztierbox gehaltene Nutztier zugeordnet sind.

3. System nach Anspruch 1 oder 2, **dadurch gekennzeichnet, dass** das System eine Halterung (20) zur Aufnahme des Transponders aufweist, die zur Befestigung an der Nutztierbox ausgebildet ist.

4. System nach einem der Ansprüche 1 bis 3, **dadurch gekennzeichnet, dass** der Transponder in eine Sichttafel (22) integriert ist.

5. System nach Anspruch 4, **dadurch gekennzeichnet, dass** die Sichttafel (22) eine Farbcodierung und/oder ein Beschriftungsfeld aufweist.

6. System nach einem der Ansprüche 1 bis 5, **dadurch gekennzeichnet, dass** das Lesegerät (36) eine Antenne (38) aufweist, die an einer Seite des Milchwagens (24) in einer Höhe im Bereich von 10 cm bis 80 cm über dem Erdboden angeordnet ist.

7. System nach einem der Ansprüche 1 bis 6, **dadurch gekennzeichnet, dass** der Milchwagen (24) einen Arm aufweist, der seitlich über den Milchwagen (24) übersteht und an dem eine Antenne (38) des Lesegeräts (36) befestigt ist.

8. System nach Anspruch 6 oder 7, **dadurch gekennzeichnet, dass** die Antenne (38) eine Fläche von 400 cm² oder mehr aufweist.

9. System nach einem der Ansprüche 1 bis 8, **dadurch gekennzeichnet, dass** die Dosiersteuerung (34) dazu ausgebildet ist, die für das mindestens eine in der Nutztierbox gehaltene Nutztier vorgesehene Dosiermenge anhand eines Alters des mindestens einen Nutztiers und einer in der Dosiersteuerung (34) hinterlegten Futterkurve zu ermitteln.

10. Verfahren zur Fütterung von Nutztieren, insbesondere Kälbern, mit den folgenden Schritten:
• Befestigen eines Transponders an einer Nutztierbox,
• Fahren eines Milchwagens (24), der ein Lesegerät (36) aufweist, zu der Nutztierbox,
• Auslesen von in dem Transponder gespeicherten Daten mit dem Lesegerät (36),
• Vorgeben einer Futtermittelmenge, die für mindestens ein in der Nutztierbox gehaltenes Nutztier vorgesehen ist, auf Grundlage der ausgelesenen Daten,
• Abgeben der vorgegebenen Futtermittelmenge mit dem Milchwagen (24) in einen der Nutztierbox zugeordneten Tränkebehälter.

## Geänderte Patentansprüche

### Geänderte Patentansprüche gemäss Regel 137(2) EPÜ.

1. System zur Fütterung von Nutztieren, insbesondere Kälbern, mit
• einem fahrbaren Milchwagen (24), der einen Vorratsbehälter (26), eine mit dem Vorratsbehälter (26) verbundene Abgabeeinrichtung (32) und eine Dosiersteuerung (34) aufweist, die dazu ausgebildet ist, eine vorgebbare Dosiermenge an Futtermittel aus dem Vorratsbehälter (26) über die Abgabeeinrichtung (32) abzugeben, und
• einem Transponder,
• wobei der Milchwagen (24) ein mit der Dosiersteuerung (34) verbundenes Lesegerät (36) zum Auslesen von in dem Transponder gespeicherten Daten aufweist und die Dosiersteuerung (34) dazu ausgebildet ist, auf Grundlage der ausgelesenen Daten eine Dosiermenge vorzugeben, die für mindestens ein in einer Nutztierbox gehaltenes Nutztier vorgesehen ist,
**dadurch gekennzeichnet, dass**
• der Transponder zur Befestigung an der Nutztierbox ausgebildet ist.

2. System nach Anspruch 1, **dadurch gekennzeichnet, dass** das System eine Datenbank umfasst, in der den auf dem Transponder gespeicherten Daten Daten über das mindestens eine in der Nutztierbox gehaltene Nutztier zugeordnet sind.

3. System nach Anspruch 1 oder 2, **dadurch gekennzeichnet, dass** das System eine Halterung (20) zur Aufnahme des Transponders aufweist, die zur Befestigung an der Nutztierbox ausgebildet ist.

4. System nach einem der Ansprüche 1 bis 3, **dadurch gekennzeichnet, dass** der Transponder in eine Sichttafel (22) integriert ist.

5. System nach Anspruch 4, **dadurch gekennzeichnet, dass** die Sichttafel (22) eine Farbcodierung und/oder ein Beschriftungsfeld aufweist.

6. System nach einem der Ansprüche 1 bis 5, **dadurch gekennzeichnet, dass** das Lesegerät (36) eine Antenne (38) aufweist, die an einer Seite des Milchwagens (24) in einer Höhe im Bereich von 10 cm bis 80 cm über dem Erdboden angeordnet ist.

7. System nach einem der Ansprüche 1 bis 6, **dadurch gekennzeichnet, dass** der Milchwagen (24) einen Arm aufweist, der seitlich über den Milchwagen (24) übersteht und an dem eine Antenne (38) des Lesegeräts (36) befestigt ist.

8. System nach Anspruch 6 oder 7, **dadurch gekennzeichnet, dass** die Antenne (38) eine Fläche von 400 cm² oder mehr aufweist.

9. System nach einem der Ansprüche 1 bis 8, **dadurch gekennzeichnet, dass** die Dosiersteuerung (34) dazu ausgebildet ist, die für das mindestens eine in der Nutztierbox gehaltene Nutztier vorgesehene Dosiermenge anhand eines Alters des mindestens einen Nutztiers und einer in der Dosiersteuerung (34) hinterlegten Futterkurve zu ermitteln.

10. Verfahren zur Fütterung von Nutztieren, insbesondere Kälbern, mit den folgenden Schritten:
• Befestigen eines Transponders an einer Nutztierbox,
• Fahren eines Milchwagens (24), der ein Lesegerät (36) aufweist, zu der Nutztierbox,
• Auslesen von in dem Transponder gespeicherten Daten mit dem Lesegerät (36),
• Vorgeben einer Futtermittelmenge, die für mindestens ein in der Nutztierbox gehaltenes Nutztier vorgesehen ist, auf Grundlage der ausgelesenen Daten,
• Abgeben der vorgegebenen Futtermittelmenge mit dem Milchwagen (24) in einen der Nutztierbox zugeordneten Tränkebehälter.
